# FASCICULE DE BREVET EUROPEEN

(11) **EP 0 649 736 B1**
(45) Date de publication et mention de la délivrance du brevet: **22.07.1998**
(21) Numéro de dépôt: 94402357.1
(22) Date de dépôt: 20.10.1994
(51) Int. Cl.: B32B 3/12, B29D 24/00, B29C 70/08

(54) **Tablette arrière de véhicule automobile et procédé de fabrication**
Gepäckraumabdeckung für Kraftfahrzeuge und Verfahren zu deren Herstellung
Motor vehicle back shelf and method for its manufacture

(30) Priorité: 22.10.1993 FR 9312636
(43) Date de publication de la demande: 26.04.1995
(73) Titulaire: PEGUFORM FRANCE, 27950 St Marcel (FR)
(72) Inventeur: Dubois, Sylvain, F-75008 Paris (FR)
(74) Mandataire: Schrimpf, Robert

(56) Documents cités:
- EP-A- 0 393 476
- EP-A- 0 551 776
- WO-A-92/11121
- FR-A- 2 686 043

## Description

La présente invention concerne les pièces automobiles du genre tablette arrière et leur fabrication.

Dans un véhicule automobile, la tablette arrière sépare l'habitacle et le coffre arrière. Elle doit être capable d'absorber le bruit de roulement provenant du coffre et de soutenir sans fluer les objets qui sont posés dessus, malgré la température élevée à laquelle elle est parfois soumise lorsqu'elle se trouve directement exposée au soleil. Il est avantageux que la tablette présente sur sa face supérieure, sensiblement plane, un renfoncement formant plumier, destiné à éviter que des objets posés sur la tablette ne s'en écartent lors des mouvements du véhicule. Il s'agit ainsi d'une pièce bien spécifique quant à sa forme, ses fonctions et ses propriétés.

Pour assurer leur rigidité et leur résistance au fluage, les tablettes arrière en matière plastique connues, réalisées par différents procédés de formage (moulage par injection d'une matière thermoplastique, thermocompression de plaques en matériau composite, moulage d'un matériau thermodurcissable chargé) comportent le plus souvent des inserts métalliques. Ces tablettes connues présentent l'inconvénient d'être lourdes et coûteuses, en raison de leur structure généralement pleine et de l'utilisation d'inserts métalliques, et présentent l'inconvénient d'être difficilement recyclables (en raison de la présence d'inserts métalliques) voire non recyclables (en raison de la présence de matériaux thermodurcissables).

On a proposé de supprimer les inserts métalliques et d'augmenter l'épaisseur de matière plastique pour conserver à la tablette une rigidité suffisante, mais cela conduit à un poids et un coût prohibitifs.

On a par ailleurs décrit, dans la demande de brevet français FR-2 686 043, un procédé de fabrication d'un panneau structurel, de type sandwich, comportant une âme alvéolaire renforcée par des inserts métalliques. Le panneau structurel ainsi réalisé présente une excellente rigidité, ce qui permet son utilisation comme châssis par exemple. Toutefois, le procédé de fabrication décrit ne convient pas pour réaliser à faible coût des tablettes arrière de véhicule.

Un autre procédé de fabrication d'un panneau structurel est décrit dans la demande de brevet français FR-2 686 042, n'utilisant pas d'inserts métalliques mais des plaques de revêtement métalliques. Ce procédé, comme le précédent, n'est pas applicable à la réalisation à faible coût d'une tablette arrière présentant un plumier, car les plaques métalliques devraient être embouties séparément de l'âme alvéolaire à la forme souhaitée pour le plumier, puis rapportées sur celle-ci.

On a proposé dans la demande européenne EP-0 393 476 un procédé pour fabriquer des panneaux de type sandwich, comprenant une âme non alvéolaire, en mousse, recouverte sur ses faces principales de peaux constituées de fibres de verre imprégnées d'un liant thermoplastique. L'âme et les peaux sont portées à la température de fusion du liant thermoplastique puis l'ensemble est introduit dans un moule. Les panneaux obtenus, de par la nature des matériaux utilisés, sont non recyclables.

On a proposé dans la publication WO-92/11121 un procédé de fabrication de panneaux de type sandwich, comprenant une âme alvéolaire et des peaux en résine thermoplastique. L'âme et les peaux sont conformées à chaud dans une presse. Le procédé décrit est appliqué à une âme en aramide et les panneaux obtenus présentent l'inconvénient d'être coûteux et non recyclables.

La présente invention a pour objet une nouvelle tablette arrière de véhicule automobile ou une pièce fonctionnellement analogue telle qu'une planche de bord, c'est-à-dire capable d'absorber les sons et mécaniquement résistante, qui soit légère, peu coûteuse à réaliser et facilement recyclable, et sa technique de fabrication.

La présente invention parvient à concilier les diverses exigences fonctionnelles et économiques requises, par les caractéristiques de la revendication 1.

Avantageusement, ledit empilement comporte également une deuxième couche de revêtement externe en matériau tissé ou non-tissé, placée dans le moule du côté opposé à ladite première couche.

De préférence, l'âme alvéolaire est placée à température ambiante dans le moule.

Avantageusement, l'âme alvéolaire, les peaux et la ou les couches de revêtement externe sont constituées principalement de polyoléfine, de préférence du polypropylène.

Avantageusement, lesdites peaux sont préchauffées à une température de ramollissement comprise entre 160 et 200°C avant leur introduction dans le moule.

L'invention a ainsi pour objet une tablette arrière ou pièce fonctionnellement analogue selon les caractéristiques de la revendication 10.

La Demanderesse a constaté que la tablette arrière ainsi obtenue, bien que ne comportant pas de plaques de revêtement ou d'inserts métalliques, répondait de façon très satisfaisante aux diverses exigences fonctionnelles précitées.

D'autres caractéristiques et avantages de l'invention apparaîtront à la lecture de la description détaillée qui va suivre, d'un exemple de réalisation non limitatif de l'invention, et à l'examen du dessin annexé sur lequel :
- la figure 1 est une vue de dessus d'une tablette arrière de véhicule,
- la figure 2 est une section transversale selon le trait de coupe II-II de la figure 1,
- la figure 3 illustre le préchauffage des peaux avant mise en place dans le moule,
- la figure 4 représente, de façon schématique, le moule utilisé pour le pressage, et
- la figure 5 montre, en vue de dessus, un cadre équipant la matrice supérieure du moule représenté sur la figure 4.

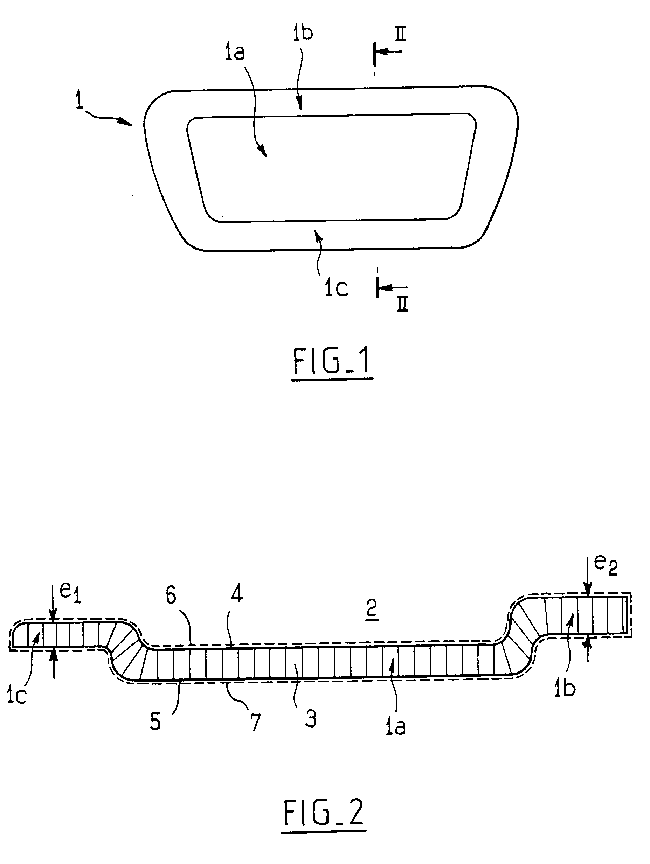

On a représenté sur les figures 1 et 2 une tablette arrière 1 de véhicule automobile obtenue conformément au procédé selon l'invention, qui sera décrit dans la suite. Cette tablette 1 présente une face supérieure apparente sensiblement plane, délimitée par un contour sensiblement trapézoïdal allongé selon la direction des côtés parallèles du trapèze et dont les angles sont arrondis. La face supérieure présente un renfoncement 2 dont le fond, plat, est bordé par des montants s'étendant en vue de dessus selon un contour sensiblement homothétique de celui de la tablette. Le renfoncement 2, venu de formation avec la tablette, sert de plumier et joue un rôle significatif pour assurer la rigidification de la structure. Il est bordé de chaque côté selon sa longueur par deux portions relevées 1b et 1c, présentant toutes deux sensiblement la même largeur mais une épaisseur différente. Plus particulièrement, la portion relevée 1b présente une épaisseur e2 supérieure à l'épaisseur du fond 1a du renfoncement 2, elle-même supérieure à l'épaisseur e1 de la portion relevée 1c. Les portions relevées 1b et 1c sont délimitées chacune supérieurement par une surface plane, parallèle au plan de la surface supérieure du fond 1a, et inférieurement chacune par une surface plane située sensiblement dans le prolongement dudit plan. La profondeur du renfoncement est de préférence supérieure ou égale à 15 mm, avantageusement voisine de 20 mm.

Comme on le voit sur la figure 2, la tablette arrière 1 comporte une âme en nid d'abeilles, en matériau thermoplastique, munie sur ses faces principales opposées d'une peau supérieure 4 en matériau thermoplastique renforcé estampable recouverte extérieurement d'une couche de revêtement 6 en matériau tissé et d'une peau inférieure 5 recouverte extérieurement d'une couche de revêtement 7 en matériau non-tissé. Les axes des alvéoles de l'âme 3 s'étendent généralement perpendiculairement aux peaux 4 et 5.

La forme de la tablette arrière représentée sur les figures 1 et 2 est donnée à titre d'illustration seulement. On peut, sans sortir du cadre de la présente invention, réaliser d'autres géométries pour fabriquer par exemple une trappe de fond de coffre sous laquelle on vient placer une roue de secours ou un panneau intérieur d'habillage de portière, et plus généralement toutes pièces automobiles présentant les mêmes exigences de forme et de fonctions.

La tablette 1 est réalisée conformément au procédé de l'invention de la façon suivante.

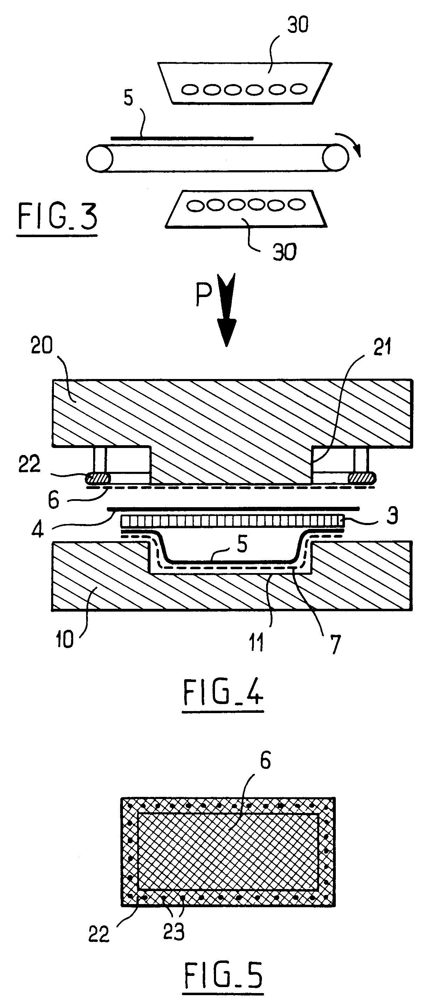

Les peaux supérieure 4 et inférieure 5 sont déposées à l'état de plaques sur un tapis roulant, comme représenté sur la figure 3. Celui-ci les entraîne à travers un dispositif de chauffage 30 destiné à les porter à une température de ramollissement. Dans l'exemple décrit, les plaques sont constituées par du polypropylène renforcé par des fibres et la température à laquelle les plaques sont portées est voisine de 180°C. Le dispositif de chauffage 30 est avantageusement constitué par deux séries de rampes infrarouges. On peut, bien entendu, utiliser un autre mode de chauffage, par soufflage d'air chaud par exemple. A sa sortie du dispositif de chauffage 30, la plaque constituant la peau inférieure 5 est posée sur la face supérieure d'une matrice inférieure 10 d'un moule froid, préalablement recouverte par la couche de revêtement externe 7, le moule comprenant également une matrice supérieure 20. Ces deux matrices 10 et 20 sont munies chacune d'un système de refroidissement connu en lui-même et non représenté, destiné à les maintenir à une température voisine de 10°C. La matrice inférieure 10 présente sur sa face supérieure une creusure 11 dont la forme correspond généralement à la forme de la face inférieure de la pièce que l'on désire réaliser. La peau inférieure 5, ramollie, tend à se déformer sous l'effet de son propre poids pour épouser la forme de la creusure 11. L'âme alvéolaire 3 est ensuite déposée à température ambiante sur la peau inférieure 5 puis elle est recouverte par la plaque constituant la peau supérieure 4. De préférence, comme représenté, les dimensions de la peau supérieure 4 sont choisies de sorte qu'elle déborde sur la tranche de l'âme 3, pour venir la recouvrir.

La matrice supérieure 20, munie de la couche de revêtement supérieure 6 maintenue par un cadre 22, est ensuite abaissée sur la matrice inférieure 10 et une pression P choisie entre 10 et 30 bars, de préférence entre 15 et 20 bars est appliquée sur l'empilement constitué de la couche de revêtement inférieur 7, de la peau inférieure 5, de l'âme alvéolaire 3, de la peau supérieure 4 et de la couche de revêtement supérieur 6. La matrice supérieure 20 présente sur sa face inférieure une avancée 21 destinée à s'engager dans la creusure 11 pour former sur la face supérieure de la tablette le renfoncement 2 souhaité. La couche de revêtement supérieur 6 est maintenue tendue par le cadre 22 sous l'avancée 21, par accrochage des bords de celle-ci sur des picots 23 répartis sur la face inférieure du cadre 22 (ou autres dispositifs de retenue, par exemple des pinces). L'avancée 21 s'étend à l'intérieur du cadre 22 et ce dernier est positionné sous la matrice 20 de sorte que l'extrémité inférieure de l'avancée 21 se situe juste au-dessus de la face supérieure de couche de revêtement externe 6.

A la fin du pressage la tablette est découpée pour prendre son contour définitif par un dispositif de coupe intégré au moule et non représenté car connu en lui-même, la couche de revêtement externe 6 étant de préférence rabattue lors de l'opération de découpe sur la tranche de la tablette.

La Demanderesse a constaté que de façon inattendue le procédé selon l'invention autorisait dans une large mesure l'écrasement de l'âme alvéolaire lors du pressage, sans destruction de la cohésion et de la résistance mécanique de la pièce obtenue. Une tentative d'explication pourrait être trouvée dans le fait que l'âme placée dans le moule entre les peaux préalablement chauffées à une température de ramollissement fond en surface et se ramollit au coeur, sans toutefois perdre sa structure alvéolée. La diminution relative de l'épaisseur de l'âme 3 due à l'écrasement, c'est-à-dire la différence e2 - e1/ e2 dans l'exemple de réalisation décrit, peut atteindre 30 % ce qui autorise une grande liberté dans le choix de la géométrie de la pièce fabriquée qui peut ainsi comporter des renfoncements plus ou moins profonds qui participent en tous cas à la rigidité d'ensemble de la pièce.

On peut proposer bien entendu d'utiliser le procédé selon l'invention avec d'autres matériaux pour réaliser en une seule étape par pressage des tablettes arrière ou des pièces du même genre. Ainsi, on peut proposer de remplacer le polypropylène renforcé de fibres constituant les peaux 4 et 5 par un matériau thermoplastique renforcé de fibres de bois (connu sous la désignation commerciale WOODSTOCK). On pourrait également remplacer l'âme alvéolaire 3 en polypropylène en nid d'abeilles par une âme alvéolaire présentant d'autres géométries.

On ne sort pas du cadre de l'invention en n'utilisant qu'une seule couche de revêtement externe.

De préférence la ou les couches de revêtement externe sont constituées dans la même matière que les peaux et l'âme alvéolaire, de façon à permettre un recyclage total de la tablette.

Sur le plan économique, le procédé selon l'invention est très avantageux puisqu'il permet de fabriquer, pour un véhicule donné, des tablettes arrière de véhicule automobile 20 à 25 % moins cher que des tablettes connues avec un gain de poids de l'ordre de 50 %, tout en respectant le même cahier des charges.

On voit finalement que l'invention applique de façon nouvelle et adaptée la technique de la thermocompression à un ensemble spécial comprenant une âme alvéolaire pour l'obtention de pièces bien spécifiques, et ce à l'encontre des enseignements généraux de la technique antérieure courante et utilisée dans le domaine automobile.

## Revendications

1. Procédé pour réaliser une tablette arrière ou toute pièce analogue de véhicule automobile, présentant une surface supérieure sensiblement plane pourvue d'un renfoncement qui comprend un fond plat en retrait par rapport à ladite surface supérieure bordé par des montants de liaison entre ledit fond et ladite surface supérieure, ledit renfoncement assurant une rigidification de la structure, caractérisé en ce que l'on réalise la tablette (1) en une seule étape, par pressage dans un moule à froid, sous une pression comprise entre 10 et 30 bars, d'un empilement constitué d'au moins une première peau (5) en matériau thermoplastique renforcé estampable, d'une âme alvéolaire (3) en matériau thermoplastique, d'une deuxième peau (4) en matériau thermoplastique renforcé estampable, l'axe des alvéoles de ladite âme alvéolaire étant orienté généralement normalement aux peaux, et d'une couche de revêtement externe (6) en matériau tissé ou non-tissé, lesdites peaux étant préalablement chauffées hors du moule à une température de ramollissement.

2. Procédé selon la revendication 1, caractérisé en ce que ledit empilement comporte également une deuxième couche de revêtement externe (7) en matériau tissé ou non-tissé, placée dans le moule du côté opposé à ladite première couche.

3. Procédé selon l'une des revendications 1 ou 2, caractérisé en ce que l'âme alvéolaire (3) est placée à température ambiante dans la moule.

4. Procédé selon l'une des revendications 1 à 3, caractérisé en ce que l'âme alvéolaire (3) présente une structure en nid d'abeilles.

5. Procédé selon l'une des revendications 1 à 4, caractérisé en ce que l'âme alvéolaire (3), les peaux (4,5) et la ou les couches de revêtement externe (5,6) sont constituées principalement de polyoléfine, de préférence du polypropylène.

6. Procédé selon l'une des revendications 1 à 5, caractérisé en ce que l'empilement, à l'exception de la première couche de revêtement externe (6) repose sur une matrice inférieure (10) de moule présentant une creusure (11), la première couche de revêtement externe (6) étant soutenue par un cadre (22) porté par une matrice supérieure du moule, sous une avancée (21) de celle-ci destinée à s'engager dans ladite creusure (11) lors de l'étape de pressage.

7. Procédé selon l'une des revendications 1 à 6, caractérisé en ce que lesdites peaux sont préchauffées à une température de ramollissement comprise entre 160 et 200°C avant leur introduction dans le moule.

8. Procédé selon l'une des revendications 1 à 7, caractérisé en ce que le moule est maintenu à une température voisine de 10°C.

9. Procédé selon l'une des revendications 1 à 8, caractérisé en ce que ladite pression est comprise entre 15 et 20 bars.

10. Tablette arrière ou pièce analogue de véhicule automobile présentant une surface supérieure sensiblement plane avec un renfoncement comportant un fond plat en retrait de ladite surface supérieure et des montants de liaison entre ledit fond et ladite surface supérieure, ledit renfoncement assurant une rigidification de la structure, caractérisée en ce qu'elle comporte une âme alvéolaire (3) en matériau thermoplastique, deux peaux (4,5) en matière thermoplastique renforcée estampable, recouvrant l'âme sur ses deux faces principales, l'axe des alvéoles étant orienté généralement normalement aux peaux, et au moins une couche de revêtement externe (6) en matériau tissé ou non-tissé, la forme de la tablette provenant d'une seule étape de pressage.

11. Tablette arrière selon la revendication 10, caractérisée en ce que le renfoncement présente une profondeur supérieure ou égale à 15 mm, de préférence voisine de 20 mm.

## Claims

1. Method for making a rear shelf or any similar part of a motor vehicle, having a substantially flat upper surface with a recess which includes a flat bottom recessed with respect to said upper surface bordered by connecting uprights between said bottom and said upper surface, said recess giving the structure rigidity, characterised in that the shelf (1) is made in a single stage, by pressing in a cold mould, at a pressure in the range 10 bars to 30 bars, a stack consisting of at least a first skin layer (5) of stampable reinforced thermoplastics material, a cellular core (3) of thermoplastics material, a second skin layer (4) of stampable reinforced thermoplastics material, the axis of the cells of said cellular core being generally oriented perpendicular to the skin layers, and an outer coating layer (6) of woven or non-woven material, said skin layers being previously heated outside the mould to a softening temperature.

2. Method according to claim 1, characterised in that said stack also comprises a second outer coating layer (7) of woven or non-woven material, placed in the mould on the opposite side to said first layer.

3. Method according to claim 1 or claim 2, characterised in that the cellular core (3) is placed in the mould at ambient temperature.

4. Method according to any one of claims 1 to 3, characterised in that the cellular core (3) has a beehive structure.

5. Method according to any one of claims 1 to 4, characterised in that the cellular core (3), the skin layers (4, 5) and the outer coating layers (5, 6) are made mainly of polyolefin, preferably polypropylene.

6. Method according to any one of claims 1 to 5, characterised in that the stack, except for the first outer coating layer (6) rests on a lower matrix (10) of the mould having a hollow (11), the first outer coating layer (6) being supported by a frame (22) carried by an upper matrix of the mould, under a protruding member (21) of the mould designed to engage in said hollow (11) during the pressing stage.

7. Method according to any one of claims 1 to 6, characterised in that said skin layers are preheated to a softening temperature in the range 160°C to 200°C before they are introduced into the mould.

8. Method according to any one of claims 1 to 7, characterised in that the mould is maintained at a temperature close to 10°C.

9. Method according to any one of claims 1 to 8, characterised in that said pressure is in the range 15 bars to 20 bars.

10. Rear shelf or similar part of a motor vehicle having a substantially flat upper surface with a recess which includes a flat bottom recessed with respect to said upper surface and connecting uprights between said bottom and said upper surface, said recess giving the structure rigidity, characterised in that it includes a cellular core (3) of thermoplastics material, two skin layers (4, 5) of stampable reinforced thermoplastics material, covering the core on its two main sides, the axis of the cells being generally oriented perpendicular to the skin layers, and at least one outer coating layer (6) of woven or non-woven material, the shape of the shelf being obtained from a single pressing stage.

11. Rear shelf according to claim 10, characterised in that the recesss has a depth greater than or equal to 15 mm, preferably close to 20 mm.

## Patentansprüche

1. Verfahren für die Herstellung einer Gepäckraumabdeckung oder eines anderen gleichartigen für ein Kraftfahrzeug bestimmten Teils mit einer weitgehend ebenen Oberfläche, welche eine Vertiefung mit einem flachen Boden aufweist, der gegenüber dieser Oberfläche zurückgesetzt ist und von Streben für die Verbindung zwischen dem Boden und der oberen Fläche umgeben ist, wobei diese Vertiefung für eine Steifigkeit der Struktur sorgt,
**dadurch gekennzeichnet**, **daß**
die Gepäckraumabdeckung (1) in einem einzigen Schritt durch Kaltpressen in einer Gießform unter einem Druck im Bereich von 10 bis 30 bar aus einer Packung hergestellt wird, welche aus mindestens einer ersten Haut (5) aus einem formbaren verstärkten thermoplastischen Material, einem wabenförmigen Kern (3) aus einem thermoplastischen Material, und einer zweiten Haut (4) aus einem formbaren verstärkten thermoplastischen Material besteht, und daß die Achse dieses wabenförmigen Kerns weitgehend senkrecht zu der Außenhaut ausgerichtet ist, und daß ein äußerer Überzug (6) aus einem gewebten oder nicht gewebten Material vorgesehen ist, und daß die Außenhaut vorher außerhalb der Gießform auf die Temperatur der Erweichung erwärmt wir.

2. Verfahren nach Anspruch 1,
**dadurch gekennzeichnet**, **daß**
diese Packung weiterhin einen zweiten äußeren Überzug (7) aus einem gewebten oder nicht gewebten Material aufweist, welcher in der Gießform gegenüber dem ersten Überzug angeordnet wird.

3. Verfahren nach einem der Ansprüche 1 oder 2,
**dadurch gekennzeichnet**, **daß**
der wabenförmige Kern (3) bei Raumtemperatur in die Gießform eingelegt wird.

4. Verfahren nach einem der Ansprüche 1 bis 3,
**dadurch gekennzeichnet**, **daß**
der wabenförmige Kern (3) die Struktur einer Bienenwabe hat.

5. Verfahren nach einem der Ansprüche 1 bis 4,
**dadurch gekennzeichnet**, **daß**
der wabenförmige Kern (3), die Häute (4, 5) und der oder die äußeren Überzüge (5, 6) hauptsächlich aus einem Polyolefin, und vorzugsweise aus einem Polypropylen hergestellt sind.

6. Verfahren nach einem der Ansprüche 1 bis 5,
**dadurch gekennzeichnet**, **daß**
diese Packung mit Ausnahme des ersten äußeren Überzuges (6) auf einer unteren Matrize (10) der mit einer Vertiefung (11) ausgestatteten Gießform aufliegt, und daß der erste äußere Überzug (6) von einem Rahmen (22) gehalten wird, welcher von einer oberen Matrize der Gießform während deren Vorwärtsbewegung (21) gehalten wird, damit sie während der Verpressung in die Vertiefung (11) eingreifen kann.

7. Verfahren nach einem der Ansprüche 1 bis 6,
**dadurch gekennzeichnet**, **daß**
diese Häute auf eine Temperatur der Erweichung im Bereich zwischen 160°C und 200°C erwärmt werden, bevor sie in die Gießform eingelegt werden.

8. Verfahren nach einem der Ansprüche 1 bis 7,
**dadurch gekennzeichnet**, **daß**
die Gießform auf einer Temperatur im Bereich von etwa 10°C gehalten wird.

9. Verfahren nach einem der Ansprüche 1 bis 8,
**dadurch gekennzeichnet**, **daß**
der beaufschlagte Druck in einem Bereich zwischen 15 und 20 bar liegt.

10. Gepäckraumabdeckung oder ein gleichwertiges für ein Kraftfahrzeug bestimmtes Teil mit einer weitgehend ebenen Oberfläche, welche eine Vertiefung mit einem flachen Boden aufweist, der gegenüber der Oberfläche zurückgesetzt und von Streben für die den Anschluß zwischen diesem Boden und der oberen Fläche eingerahmt ist, und bei der die vorgesehene Vertiefung für eine Steifigkeit der Struktur sorgt,
**dadurch gekennzeichnet**, **daß**
sie einen wabenförmigen Kern (3) aus einem thermoplastischen Material, sowie zwei Häute (4, 5) aus einem verstärkten verformbaren thermoplastischen Material aufweist, weiche den Kern auf seinen beiden Hauptflächen Oberdecken, und daß die Achse der Waben weitgehend senkrecht zu diesen Häufen angeordnet ist, und daß mindestens ein äußerer Überzug (6) aus einem gewebten oder nicht gewebten Material vorgesehen ist, und daß die Abdeckung in einem einzigen Schritt der Verformung unter Druck hergestellt wird.

11. Gepäckraumabdeckung nach Anspruch 10,
**dadurch gekennzeichnet**, **daß**
die Vertiefung eine Tiefe von mindestens 15 mm und vorzugsweise eine Tiefe von etwa 20 mm aufweist.
